(19) Europäisches Patentamt
European Patent Office
Office européen des brevets

(11) **EP 0 877 929 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(21) Anmeldenummer: **97901535.1**

(22) Anmeldetag: **16.01.1997**

(51) Int Cl.$^7$: **G01N 22/00**

(86) Internationale Anmeldenummer:
**PCT/EP97/00175**

(87) Internationale Veröffentlichungsnummer:
**WO 97/28440 (07.08.1997 Gazette 1997/34)**

(54) **MIKROWELLENHOHLRAUMRESONATOR FÜR DIE KONTINUIERLICHE, SPEKTROSKOPISCHE GASANALYSE**

MICROWAVE CAVITY RESONATOR FOR CONTINUOUS SPECTROSCOPIC GAS ANALYSIS

CAVITE RESONNANTE A HYPERFREQUENCES POUR ANALYSE DE GAZ SPECTROSCPIQUE CONTINUE

(84) Benannte Vertragsstaaten:
**AT BE CH DE FR GB IT LI NL**

(30) Priorität: **03.02.1996 DE 19603905**

(43) Veröffentlichungstag der Anmeldung:
**18.11.1998 Patentblatt 1998/47**

(73) Patentinhaber: **Forschungszentrum Karlsruhe GmbH**
**76133 Karlsruhe (DE)**

(72) Erfinder:
• BERGER, Lutz
**D-76344 Eggenstein-Leopoldshafen (DE)**
• KÖNIGER, Franz
**F-67470 Buhl (FR)**
• METZGER, Hans-Dieter
**D-76327 Karlsruhe (DE)**
• SCHMITT, Gerhard
**D-60487 Frankfurt (DE)**

(74) Vertreter: **Rückert, Friedrich, Dr.**
**Forschungszentrum Karlsruhe GmbH**
**Patente und Lizenzen**
**Weberstrasse 5**
**76133 Karlsruhe (DE)**

(56) Entgegenhaltungen:
**DE-A- 3 723 606          DE-C- 3 645 240**

• VGB KRAFTWERKSTECHNIK, Bd. 72, Nr. 1, 1.Januar 1992, Seiten 65-69, XP000246542 DOERTELMANN D: "DIE MIKROWELLENSPEKTROSKOPIE, EIN NEUES SYSTEM FUER DIE BESTIMMUNG VON AMMONIAK IN RAUCHGASEN"
• TECHNISCHES MESSEN TM 1982 - 1988 INCOMPLETE, Bd. 58, Nr. 11, 1.November 1991, Seiten 433-438, XP000272564 PAULUS J: "SELEKTIVES MESSEN IN DER PROZESSANALYTIK MIT DEM MIKROWELLENPROZESSANALYSATOR MIPAN" in der Anmeldung erwähnt

**Beschreibung**

Die Erfindung betrifft einen Mikrowellenhohlraumresonator als Meßzelle für Prozeßgasanalysatoren. Mit einer solchen Einrichtung wird mit mikrowellenspektroskopischen Methoden unter Ausnutzung des Starkeffekts die Konzentration einer vorgesehenen Gaskomponente in einem Prozeßgas bestimmt. Üblicherweise werden die Messungen nach dem Durchstrahlungsprinzip durchgeführt, bei dem räumlich sehr lange Meßzellen eingesetzt werden (siehe DE 36 45 240 C2), um eine hohe Nachweisempfindlichkeit zu erreichen.

Eine Alternative zur Vermeidung solcher Baulängen sind Resonatoren. Um möglichst niedrige Gaskonzentrationen hochempfindlich nachweisen zu können, ist man bestrebt, die Güte des Resonators sehr hoch zu treiben. Eine hohe Güte bringt zwangsläufig mit sich, daß der Resonator empfindlich auf Umgebungseinflüsse reagiert. Diese Einflüsse müssen durch stabilisierende Maßnahmen neutralisiert werden (siehe hierzu R.Reinschlüssel et al., "Design of a sensitive cavity..., in AEÜ, Band 40, 1986, Heft 5, s.313-320). Die Kompensation der äußeren Einflüsse bedeutet zusätzlichen konstruktiven Aufwand, der eine erheblich Erhöhung der Baukosten mit sich bringt.

Ein prozeßfähiger Gasanalysator wird in DE-Z: Technisches Messen 58 (1991) 11, Seiten 433 bis 438 vorgestellt. Darin wird ein Mikrowellenprozeßanalysator zur schnellen Analyse von z. B. Rauchgasen beschrieben.

In der US 3,973,186 wird über einen Mikrowellenhohlresonator für kontinuierliche, spektroskopische Gasanalysen berichtet. Der Resonaor ist rechteckig ausgebildet, kann aber auch zylindrisch sein. Die Resonanzfrequenz des Resonators kann variiert werden, um verschiedene polare Moleküle individuell untersuchen zu können.

Aus dem Bereich der Kraftwerkstechnik und der Müllverbrennung kommt die Forderung, die als Aufgabe der Erfindung zugrunde liegt, nämlich die Bestimmung der Konzentration von Ammoniak im Rauchgas unter Prozeßbedingungen, in Echtzeit und ohne Querempfindlichkeit gegen die andern Bestandteile des Prozeßgases. Hierzu muß ein prozeßtaugliches Analysegerät in den Abluftanlagen installiert werden, das in der rauhen Umgebung aufgestellt werden kann und dort zuverlässig die Konzentration des bekannten Gasanteils oder der Gaskomponente im Langzeitbetrieb erfaßt.

Erfindungsgemäß wird die Aufgabe mit einer als Hohlraumresonator für Mikrowellen ausgebildeten Meßzelle gemäß den Merkmalen des Anspruch 1 gelöst. Der Grundgedanke ist die Reduktion der Meßzellenlänge durch einen Resonator niedriger Güte (Low-Q-Resonator). Dieser Resonator ist auf die Absorptionsfrequenz des Meßgases, also der zu untersuchenden Komponente im Prozeßgas, abgestimmt. Die mikrowellentechnischen Eigenschaften legen seine Geometrie im wesentlichen fest. Durch die vielfache Reflexion im Resonator ist die effektive Weglänge in ihm erheblich größer als seine geometrische Länge. Eine räumlich erheblich kleinere Bauweise ist dadurch möglich.

Der Resonator ist durch ein dielektrisches Fenster in zwei Kammern, den Rundhohlleiterteil und den Koaxialleiterteil druck- und gasdicht unterteilt.

Das freie, spitz zulaufende Ende des Innenleiters im Koaxialleiterteil liegt unmittelbar vor dem dielektrischen Fenster und hat dorthin höchstens noch die Distanz, die für eine axiale Verschiebemöglichkeit zur Justierung und Feinabstimmung der Mikrowellenverhältnisse notwendig ist. Die Länge des Innenleiters, der Starkelektrode, in der Meßzelle muß so einstellbar sein, daß ihre Spitze in einen Knoten des elektrischen Feldes zu liegen kommt.

Der Koaxialleiterteil des Resonators bildet die eigentliche Meßzelle oder den Wechselwirkungsraum. In sie wird das aus der Bypass-Leitung abgezweigte Prozeßgasvolumen kontinuierlich in der Nähe des dielektrischen Fensters eingeströmt, dann über Gasdurchlässe im dortigen, feststehenden Mikrowellenreflektor möglichst größflächig und kontinuierlich abgesaugt, so daß sich in der Meßzelle ein vorgegebenes Druckgefälle einstellt.

Im Rundhohlleiterteil des Resonators erfolgt die Mikrowellenein- und -auskopplung. Der Mikrowellenreflektor ist dort zum Einstellen optimaler Resonanzbedingungen und optimaler Einund Auskoppelbedingungen axial verstellbar.

Der Resonator kann ganz spezifisch zur Messung nur einer Gassorte vorgesehen und deshalb in seiner Resonatorgeometrie nur darauf abgestimmt sein. Er kann aber auch noch für andere Gassorten vorgesehen sein, deren Absorptionslinien im ähnlichen Wellenlängenbereich liegen. Dann könnte es zweckmäßig sein, den Resonator überzudimensionieren. Für die zuverlässige Messung werden dann solche Betriebsparameter gesucht, mit denen sich in einem mit vorgegebenem Frequenzbereich nur eine Resonanzfrequenz (Mode) befindet.

Um periphere Einflüsse, wie mechanische Einwirkungen auf den Resonator, weitestgehend zu vermeiden und um Temperaturschwankungen von außerhalb höchstens unbedeutend in den Resonatorraum aufgrund einer großen Wärmekapazität eindringen zu lassen, ist der Resonator sehr dickwandig ausgeführt.

Ein Meßgerät mit einem solchen Resonator und der darin räumlich abgeschotteten Meßzelle, dessen Resonatorgüte sich etwa zwischen 1000 und 2000 bewegt (Low-Q-Resonator) ist für eine rauhe Prozeßumgebung tauglich und erfüllt die Erwartung an Nachweisempfindlichkeit, Wartungsfreundlichkeit, Stabilität und wirtschaftlichen Aufbau.

Eine Ausführung des Mikrowellenhohlraumresonators mit niedriger Güte zur Detektion bzw. Bestimmung der Konzentration von speziell Ammoniak in Rauchgas ist in der Zeichnung skizziert und wird im folgenden näher beschrieben.

Es zeigen:

Fig. 1a den Resonator mit seinem Rundhohlleiter- und Koaxialleiterteil,

Fig. 1b die schematisch konstruktive Darstellung des Low-Q-Resonators,

Fig. 2 den Vergleich des Resonatorhalbwertsbreite mit der Linienbreite einer $NH_3$-Linie,

Fig. 3 den schematischen Meßaufbau des Gasanalysators.

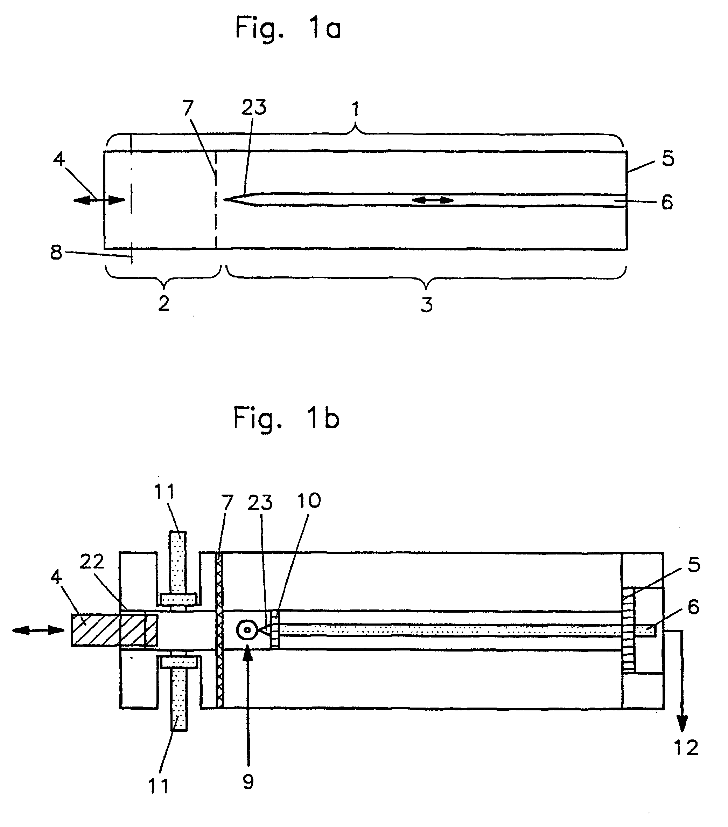

Der Aufbau des Low-Q-Resoantor 1 ist einfach gehalten und besteht vom Prinzip her aus vier einzelnen Bausteinen (Fig. 1b) :

i.

-   Dem Koaxialleiterteil 3 als eigentliche Meßzelle 3 im wesentlichen mit dem Innenleiter 6 als Starkseptum 6 oder Starkelektrode 6, das neben der Durchführung im feststehenden Mikrowellenreflektor 5 noch durch einen Teflonstern 10 hinter der Spitze in koaxialer Lage gehalten wird. Der Teflonstern 10 ist so gestaltet, daß er die Mikrowelle im Resonator 1 und die kontinuierliche Meßgasströmung nur unwesentlich beeinträchtigt.

ii.

-   Dem Rundhohlleiterteil 2 als Mikrowellenkoppelblock, mit der Ein- und Auskopplung 8 und dem als λ/4-Transformator ausgeführten Mikrowellenreflektor 4, der axial verschiebbar ist und zwei Abstimmfunktionen ermöglicht: einerseits für die Resonanzabstimmung im Resonator 1 und andererseits für die Einstellung der optimalen Ein- und Auskopplung der Mikrowelle.

iii.

-   Der Koaxialleiterteil 3 als eigentliche Meßzelle 3 mit der Blende 9 oder Restriktion 9 für den Meßgaseinlaß aus dem in der Bypass-Leitung 21 geführten Prozeßgas und dem feststehenden Mikrowellenreflektor 5, der als Modenfilter konstruiert ist und gleichzeitig als Halterung und Durchführung für den axial verschiebbaren Innenleiter 6, die Starkelektrode 6 oder auch Starkseptum 6, dient. Das Meßgas wird kontinuierlich über Bohrungen im Mikrowellenreflektor 5 abgesaugt, ohne oder nur mit unbedeutender Beeinflussung der Mikrowellenreflexion.

iv.

-   Dem dielektrischen Fenster 7 in Form einer Kaptonfolie 7, die den Rundhohlleiterteil 2 vom Koaxialleiterteil 3 des Resonators 1 trennt. Die Folie 7 ist mechanisch hinreichend zäh und chemisch hinreichend inert, so daß der Druckunterschied zwischen beiden Resonatorräumen 2, 3 aufrecht gehalten wird und keine chemischen Reaktionen eintreten. Im Rundhohlleiterteil 2 herrscht im allgemeinen Umgebungsdruck, im Koaxialleiterteil 3 Unterdruck. Die Einwirkung der Folie 7 auf die Mikrowelle im Resonator 1 ist unbedeutend.

Für die Dimensionierung des Resonators 1 werden einige Moden von H- und E-Wellentypen im interessierenden Frequenzbereich betrachtet. Der Grundmode ist jener Wellentyp mit dem höchsten Verhältnis von cut-off-Wellenlänge zum Durchmesser des Resonators 1. Das ist im Anwendungsbeispiel der $H_{11}$-Mode. Für den Aufbau des Low-Q-Resonators 1 liegt der $H_{11}$-Mode zugrunde. Alle anderen Wellentypen haben hier eine Cut-Off-Frequenz weit oberhalb des gewünschten Frequenzbereichs und sind deshalb in dem Resonator 1 nicht ausbreitungsfähig.

Hergeleitet aus bekannten hochfrequenztechnischen bzw. mikrowellentechnischen Betrachtungen (siehe z. B. Meinke Gundlach, "Taschenbuch der Hf-Technik") wird aus fertigungstechnischen Gründen der Innendurchmesser des Resonators 1 zu D = 10 mm gewählt. Mit kleinen konstruktiven Änderungen kann er dann bis zu Frequenzen um 30 GHz verwendet werden, da die Grenzfrequenz $\lambda_o$ tiefer liegt, und zwar für den $H_{11}$ Mode bei etwa 17,56 GHz.

Allgemein ergibt sich die Wellenlänge in einem Hohlleiter $\lambda_g$ mit der Wellenlänge im freien Raum $\lambda_o$ = 12.556 mm ($f_o$ = 23.87013 GHz) und der cut-off-Wellenlänge $\lambda_c$ des Wellenleiters nach

$$\lambda_g = \lambda_o / \sqrt{[\,1 - (\lambda_o/\lambda_c)^2\,]}$$

Zur Anpassung an den $H_{11}$-Mode im Rundhohl- 2 und Koaxialleiter 3 beim Durchmesser D = 10 mm muß der Durchmesser d des Innenleiters 6 oder der Starkelektrode 6 durch Angleichung der Cut-Off-Wellenlänge ($\lambda_{cHL}$ (im Rundhohlleiter) = $\lambda_{cKoax}$ (im koaxialen Hohlleiter) = 18.54 mm) angepaßt werden. Für Durchmesserverhältnisse D/d kleiner 5 gilt mit

$$\lambda_c = 0.973 \times \pi/2 \times (D+d)$$

$$d = \lambda_c/0.973 \times 2/\pi - D$$

Daraus ergibt sich für die Starkelektrode 6 ein optimaler Durchmesser von d = 2.13 mm. Mit handelsüblichem Stangenmaterial (Edelstahl, Messing) von 2 mm erreicht man eine ausreichende Anpassung der elektromagnetischen Wellen im Hohlleiter an den koaxialen Leiterteil 3 ($\lambda_{cKoax}$ = 18.34 mm). Material dieser Stärke dämpft gleichzeitig mechanische Schwingungen der Starkelektrode 6, welche im Prozeß auftreten können. Solche Schwingungen sind zu vermeiden, weil sie unerwünschterweise die Starkspannung und damit auch die Signalamplitude modulieren.

Für verschiedene Werte des Parameters p, des ganzzahligen Vielfachen der halben Wellenlänge, ergeben sich mit dem $H_{11}$-Mode ($\lambda_c$ = 1.706xD) bei der Resonanzfrequenz $f_o$ = 23.87013 GHz ($\lambda_o$ = 12.556 mm, $\lambda_{gHL}$ = 18.54 mm, die resultierende Wellenlänge im Rundhohlleiter 2) für die gewünschte Absorptionslinie des Ammoniaks ($NH_3$) und für D = 10 mm folgende Näherungswerte für die Länge L' des Stückes Resonator 2 ohne den koaxialen Teil 3 (Fig. 1a + b)

| p | 4 | 5 | 6 | 7 | 8 |
|---|---|---|---|---|---|
| L'/mm | 37.09 | 46.36 | 55.63 | 64.89 | 74.16 |

Für den koaxialen Leiterteil 3 des Low-Q-Resonators 1 ergibt sich in gleicher Weise

| p | 25 | 26 | 27 | 28 | 29 |
|---|---|---|---|---|---|
| L/mm | 201.00 | 209.04 | 217,08 | 225.12 | 225.12 |

Gemessen wurde die Länge L der Starkelektrode 6 für ein optimales Resonanzbild zu etwa 207 mm, bzw. 215 mm für aufeinanderfolgende, ähnliche Zustände im Resonator 1. Der Abstand zweier optimaler Zustände, das sind eine halbe Hohlleiterwellenlänge im koaxialen Teil des Resonators 1, beträgt demzufolge etwa 8 mm. Für die gleiche Cut-Off-Wellenlänge $\lambda_c$ von 18,4 mm ist der Abstand zweier halber Hohlleiterwellenlängen im nichtkoaxialen Teil 2 des Rundhohlleiters 9.3 mm. Der koaxiale Leiterteil 3 des Resonators 1 ist deshalb etwa 207 mm, der Rundhohlleiterteil 2 etwa 55 mm lang.

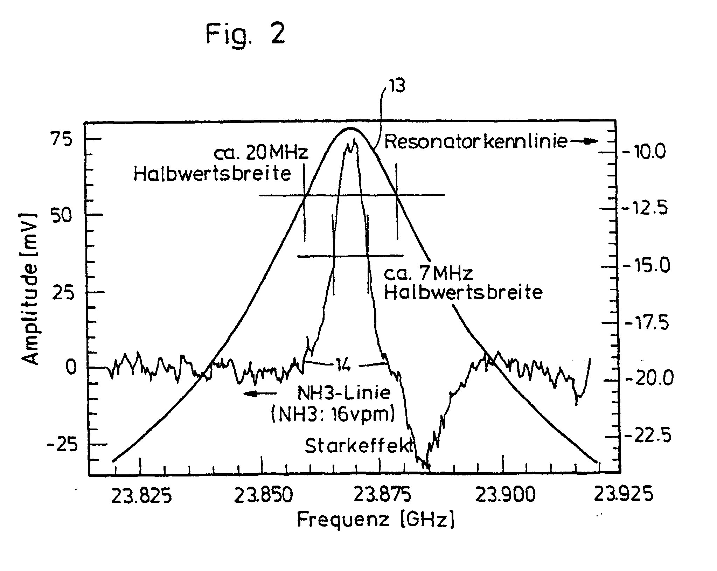

Die Halbwertsbreite der Resonatorkennlinie 13 des Resonators 1 (Fig. 2) ist vorteilhafterweise etwa um den Faktor 2 bis 3 größer als die Halbwertsbreite der Absorptionslinie 14. Diese beträgt für $NH_3$ etwa 7 MHz bei dem vorgegebenen Druck (Fig. 2), ist bei niedrigeren Drücken kleiner und nimmt zu höheren Drücken zu (Linienverbreiterung). Mit diesen Daten wird zunächst eine beladene Güte des Resonators 1 von 1000 bis 2000 angestrebt. Die Konfiguration des Low-Q-Resoantors 1 nach den oben angegebenen Gesichtspunkten führt schließlich zu einer Güte von etwa 1200.

Die Mikrowellenzuführung vom Sender 15 her geschieht über den Reckteck-Hohlleiter 11 und den Koppelschlitz in der Wand des Rundhohlleiters 2. In gleicher Weise ist auch die Anbindung des Detektors 17 ausgelegt. Diese beiden Koppelschlitze haben je ungefähr die Länge der halben Resonanzwellenlänge. Die Breite und Wandstärke ist klein gegen diese Schlitzlänge. Die Wandstärke im Ein- und Auskoppelschlitzbereich sollte aus mikrowellentechnischer Sicht unendlich dünn sein, sie wird aber so klein gehalten, daß ausreichende mechanische Stabilität während des Betriebs besteht und der Einfluß auf die Mikrowelle unerheblich bleibt.

Die Ankopplung an den Prozeß erfolgt nach der schematischen Zeichnung in Fig. 1b über die in der Regel beheizte Bypass-Leitung 21, die einen Teil des zu überwachenden Gasstromes an der Meßzelle 3 vorbeiführt. Der von der Blende 9 ausgehende Rüssel ragt in den Hauptstrom in der Bypass-Leitung 21 und zweigt kontinuierlich das vorgesehene Meßgasvolumen ab. Die Blende 9, in anderer Bauweise auch als Ventil 9 gestaltet, allgemein die Restriktion 9, reduziert den Druck in der Meßzelle 3 durch Absaugen des Meßgases daraus, so daß das vorgesehene Druckgefälle zwischen der Blende 9 und dem Mikrowellenreflektor 5 am andern Ende der Meßzelle 3 aufrechterhalten wird. Die Absaugleistung der Pumpe 20 ist deshalb dem Druckbereich angepaßt, der bei anderen zu messenden Gasen unterschiedlich sein kann.

Das auf die besonders schnelle Erfassung von Meßwerten optimierte Low-Q-Meßsystem erfordert einige zusätzliche Maßnahmen bei der Konzeption des Gasweges. Wesentlich ist die Verlegung der Bypass-Leitung 21 so nahe wie möglich an die Meßzelle 3, damit das zwischen der Blende 9 in der Meßzelle 3 und dem Meßgasabgriff, dem Rüsseleingang im Bereich der größten Gasströmung in der Bypass-Leitung 21 unvermeidbare Totvolumen minimal wird. Die einstellbare Blende 9 ersetzt ein im allgemeinen konstruktiv komplexeres Ventil.

Ein zu großer Druckgradient in der Meßzelle 3 führt wegen der Abhängigkeit des Meßsignals vom Druck zu einer Signalreduktion. Für ein hinsichtlich der Schnelligkeit optimiertes Meßsystem muß ein Kompromiß zwischen Signalamplitude, Gasdurchsatz und Druck in der Zelle gefunden werden.

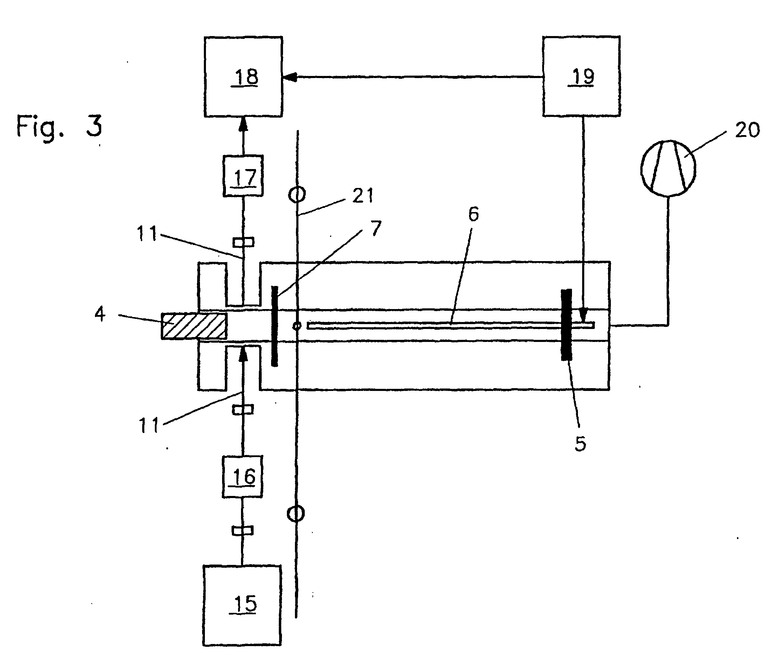

Der gesamte Geräteaufbau des Gasanalysators folgt dem bekannten Schema, wie er in der DE 36 45 240 C2 angewendet wurde und in Fig. 3 skizziert ist. Der frequenzstabilisierte Mikrowellensender 15, eine Gunn-Diode, strahlt in den Low-Q-Resonator 1 ein. Der Sender 15 ist von der Einkopplung über einen Isolator 16 entkoppelt. Das starkmodulierte Mikrowellenfeld wird mit dem Detektor 17 aufgenommen und dem Lock-In-Verstärker 18 zugeleitet. Dieser verstärkt das Empfangssignal phasensynchron zum Starksignal soweit, daß die Auswerteeinheit, z. B. ein Mikrorechner, das aufbereitete Signal verfügbar machen kann. Fig. 2 zeigt, daß die durch den Starkeffekt verschobene Linie ausreichend ausmoduliert ist, so daß die eigentliche Absorptionslinie 14 symmetrisch auftritt.

Aufgrund der kurzen Gasaustauschzeiten, ca. 100 Meßzellenvolumen/sec bei diesem Resonator 1, die sich durch die kleinen Abmessungen der Meßzelle 3 und die Optimierung des Gasweges ergeben, wird die Ansprechzeit auf Änderungen im Meßgas erheblich verkürzt. Für das reine Meßsystem, ohne externe zusätzliche Probenahmeleitungen, werden auch mit Ammoniak, einer Komponente mit starken Adsorptionseigenschaften, Werte von etwa 30 Millisekunden erreicht. Im normalen Meßbetrieb werden daher Ansprechzeiten von deutlich unter einer Sekunde erreicht. Das bedeutet eine Beschleunigung um mindestens den Faktor 200 gegenüber dem in der DE 36 45 240 C2 beschriebenen Gerät, in der Nachweisgrenze wird dasselbe um den Faktor 2 übertroffen. Der Analysator mit der Low-Q-Meßzelle 1 erreicht eine Nachweisempfindlichkeit bei Ammoniak ($NH_3$) von 0,1 vppm bei einer Zeitkonstante des Lock-In-Verstärkers von 20 Sekunden. Mit ihm sind jetzt regelungstechnische Aufgaben lösbar, die vorher wegen der Langsamkeit der Analysatoren nicht gelöst werden konnten.

Bezugszeichenliste

1    Resonator, Low-Q-Resonator
2    Rundhohleiterteil
3    Koaxialleiterteil, Meßzelle
4    axial verschiebbarer Mikrowellenreflektor
5    feststehender Mikrowellenreflektor
6    Innenleiter, Starkelektrode, Starkseptum
7    dielektrisches Fenster, Kaptonfolie, Folie
8    Mikrowellenkoppelebene, Ein- und Auskopplung
9    Blende, Restriktion, Ventil, Gaseinlaß
10   dielektrischer Stern, Teflonstern
11   Hohlleiter, Rechteckhohlleiter
12   Gasauslaß
13   Resonatorkennlinie
14   Ammoniak-Linie, Absorptionslinie
15   Mikrowellensender
16   Isolator
17   Detektor
18   Lock-in-Verstärker
19   Starkgenerator
20   Pumpe
21   Bypass-Leitung
22   dielektrischer Hohlzylinder, Mikrowellensumpf
23   Spitze der Starkelektrode

**Patentansprüche**

1. Mikrowellenhohlraumresonator für die kontinuierliche, spektroskopische Gasanalyse zur Ermittlung der Konzentration einer bestimmten Komponente in einem Prozeßmedienstrom,

**dadurch gekennzeichnet, daß**

- neben der Festlegung des Resonatordurchmessers durch seine Betriebsfrequenz seiner weiteren Dimensionierung sowie der Einstellung auf eine niedrige Güte Q der Grundmode mit dem höchsten Verhältnis von cutt-off-Wellenlänge zum Durchmesser des Resonators zugrunde liegt, wobei die Halbwertsbreite der Resonatorkennlinie so eingestellt wird, daß sie um einen Faktor aus dem unteren einstelligen Zahlenbereich größer ist als die Halbwertsbreite der zu messenden Absorptionslinie,
- der Resonator (1) ein durch zwei Mikrowellenreflektoren (4, 5) begrenzter, hohlzylindrischer Körper ist, der aus einem Rundhohlleiterteil (2) und einem Koaxialleiterteil (3) besteht, die voneinander über ein gas- und druckdichtes dielektrisches Fenster (7) getrennt sind, wobei der axial verschiebbare Innenleiter (6) des Koaxialleiterteils (3) als Elektrode für die Anwendung der Starkmodulation dient und im dortigen Mikrowellenreflektor (5) durchgeführt ist und gehalten wird,
- zwei Hohlleiter (11), einer für die Mikrowelleneinkopplung in den Resonator (1) und der andere für die Mikrowellenauskopplung aus dem Resonator (1), symmetrisch zur Achse des Resonators (1) an demselben im Bereich des Rundhohlleiterteils (2) anflanschen,
- einer der Mikrowellenreflektoren (4, 5) feststeht und der andere zur Abstimmung auf die vorgesehene maximale Absorptionsfrequenz und die Einstellung auf optimale Ein- und Auskopplung der Mikrowelle axial verschiebbar ist,
- eine Bypass-Leitung (21), durch die ein aus dem Prozeßmedienstrom kontinuierlich abgezweigter Teil in gasförmiger Form strömt, unmittelbar am Koaxialleiterteil (3) im Bereich des dielektrischen Fensters (7) vorbeiführt und dort über eine Blende (9) in der Resonatorwand einen Abzweig kleiner Länge zum Koaxialleiterteil (3) hat, wodurch eine kontinuierliche, kleinvolumige Probeneinleitung erfolgen kann, die kontinuierlich, unter Einhaltung eines vorgegebenen Druckgefälles durch mindestens eine Öffnung im dortigen Mikrowellenreflektor (5) hindurch abgepumt werden kann.

2. Mikrowellenhohlraumresonator nach Anspruch 1,
   **dadurch gekennzeichnet, daß**
   der Grundmode der H11-Mode ist.

**Claims**

1. Microwave cavity resonator for the continuous, spectroscopic gas analysis to determine the concentration of one specific component in a flow of processing media,
   **characterised in that**

   - in addition to establishing the resonator diameter by its operational frequency, the fundamental mode with the highest ratio of cut-off wavelength to the diameter of the resonator is based on its additional dimensions and the setting to a low quality Q, the half-width of the resonator characteristic being set so that it is greater than the half-width of the absorption line to be measured by a factor from the lower range of single-figure numbers,
   - the resonator (1) is a hollow-cylindrical body which is defined by two microwave reflectors (4, 5) and comprises a concave conductor part (2) and a coaxial conductor part (3), which parts are separated from each other by a gas- and pressure-tight dielectric window (7), the axially displaceable internal conductor (6) of the coaxial conductor part (3) serving as the electrode for the application of the Stark modulation and being guided-through and retained in the microwave reflector (5) there,
   - two hollow conductors (11), one for the microwave coupling into the resonator (1) and the other for the microwave uncoupling from the resonator (1), are flangemounted on the resonator (1) in the region of the concave conductor part (2) in symmetry with the axis of said resonator,
   - one of the microwave reflectors (4, 5) is stationary, and the other is axially displaceable for adaptation to the envisaged maximum absorption frequency and the setting to optimum coupling and uncoupling of the microwave, and
   - a bypass pipe (21), through which one part, which is continuously branched-off from the flow of processing media, flows in gaseous form, is guided directly past the coaxial conductor part (3) in the region of the dielectric window (7) and has there a branch of short length extending to the coaxial conductor part (3) via an aperture (9) in the resonator wall, whereby a continuous introduction of low-volume samples can be effected, which can be pumped-away continuously through at least one opening in the microwave reflector (5) there whilst maintaining a prescribed pressure gradient.

**2.** Microwave cavity resonator according to claim 1, **characterised in that** the fundamental mode is the H11 mode.

**Revendications**

**1.** Cavité résonnante à hyperfréquences pour une analyse de gaz continue, spectroscopique pour déterminer la concentration d'un certain composant dans le fluide de contrôle,
**caractérisée en ce que**

- à côté de la fixation du diamètre du résonateur par sa fréquence de fonctionnement de son autre dimensionnement ainsi que du réglage sur un faible coefficient de qualité (Q), le mode de base avec le rapport le plus élevé entre la longueur d'ondes de coupure définit le diamètre du résonateur, la demi-longueur d'ondes de la caractéristique du résonateur étant réglée pour être supérieure à la demi-longueur d'ondes de la ligne d'absorption à mesurer, d'un coefficient de la plage des chiffres à une position inférieure
- le résonateur (1) est un corps cylindrique creux délimité par deux réflecteurs hyperfréquences (4, 5), ce corps se composant d'une partie de guide d'ondes rond (2) et d'une partie de conducteur coaxial (3), ces deux parties étant séparées l'une de l'autre par une fenêtre (7) diélectrique, étanche au gaz et à la pression, et le conducteur intérieur (6) coulissant axialement de la partie coaxiale (3) sert d'électrode pour les applications à la modulation Stark, en traversant le réflecteur hyperfréquences (5) pour être tenu par celui-ci,
- deux guides d'ondes (11) dont l'un est prévu pour le couplage d'entrée des hyperfréquences dans le résonateur (1) et l'autre pour le découplage des hyperfréquences du résonateur (1), symétriquement par rapport à l'axe du résonateur (1), sur celui-ci au niveau de sa partie de guide d'ondes rond (2),
- l'un des réflecteurs à micro-ondes (4, 5) étant fixe et l'autre étant destiné à s'accorder sur la fréquence d'absorption maximale prévue et le réglage sur le découplage d'entrée et de sortie des hyperfréquences se faisant par coulissement axial,
- une conduite de dérivation (21) traversée par une partie du fluide de procédé, dérivé en continu, et se présentant à l'état gazeux, passe directement sur la partie de conducteur coaxial (3) au niveau de la fenêtre diélectrique (7) et de là par un diaphragme (9) dans la paroi du résonateur, dans une branche de longueur plus faible pour arriver dans la partie de conducteur coaxial (3) pour faire un prélèvement continu de faible volume d'échantillon, qui est pompé en continu en respectant une chute de pression prédéterminée à travers au moins une ouverture dans le réflecteur hyperfréquences (5) correspondant.

**2.** Cavité résonnante à hyperfréquences selon la revendication 1,
**caractérisée en ce que**
le mode de base est le mode H11.

## Fig. 1a

## Fig. 1b

## Fig. 2

Fig. 3

EP 0 877 929 B1